# EUROPÄISCHE PATENTSCHRIFT

(11) **EP 2 997 427 B1**
(45) Veröffentlichungstag und Bekanntmachung des Hinweises auf die Patenterteilung: **28.12.2022**
(21) Anmeldenummer: 14724725.8
(22) Anmeldetag: 15.05.2014
(51) Int. Cl.: G05B 19/042

(54) **STEUERUNGSEINRICHTUNG UND VERFAHREN ZUM UMSCHALTEN VON EIN-/AUSGABEEINHEITEN EINER STEUERUNGSEINRICHTUNG**
CONTROL DEVICE AND METHOD FOR SWITCHING INPUT/OUTPUT UNITS OF A CONTROLLER
SYSTÈME DE COMMANDE ET PROCÉDÉ DE COMMUTATION DE MODULES D'ENTRÉE/SORTIE D'UN SYSTÈME DE COMMANDE

(30) Priorität: 17.05.2013 DE 102013105097
(43) Veröffentlichungstag der Anmeldung: 23.03.2016
(73) Patentinhaber: Wago Verwaltungsgesellschaft mbH, 32423 Minden (DE)
(72) Erfinder: BUDA, Aurel, 32423 Minden (DE); GALKA, Peter, 32423 Minden (DE); HILGERS, Detmar, 31683 Obernkirchen (DE)
(74) Vertreter: Lang, Johannes
(86) Internationale Anmeldenummer: PCT/EP2014/059908
(87) Internationale Veröffentlichungsnummer: WO 2014/184276

(56) Entgegenhaltungen:
- EP-A1- 2 400 360
- EP-A1- 2 538 609
- EP-A2- 2 202 599
- DE-A1- 10 161 834
- Anonymous: "Common Application Profile PROFIenergy - Technical Specificationfor PROFINET - Version 1.1", PROFIBUS Nutzerorganisation e. V. (PNO); PROFIBUS & PROFINET International (PI) , August 2012 (2012-08), XP55131803, Gefunden im Internet: URL:http://www.felser.ch/download/normen/p no/3802_V11.pdf

## Beschreibung

Die Erfindung betrifft eine Steuerungseinrichtung mit einer Steuerungseinheit, die über einen Datenbus zum Austausch von Prozessdaten mit mindestens einer Einund/oder Ausgabeeinheit in Kommunikationsverbindung steht.

Die Erfindung betrifft weiterhin ein Verfahren zum Umschalten von Ein- und/oder Ausgabeeinheiten einer Steuerungseinrichtung in einen Energiezustand, bei dem der Energieverbrauch durch Busteilnehmer, die an die Ein-/Ausgabeeinheiten anschließbar sind, reduziert wird.

Für Steuerungseinrichtungen, insbesondere speicherprogrammierbaren Steuereinrichtungen, ist es oftmals erforderlich den Energieverbrauch von Busteilnehmern zu reduzieren, die an eine dezentrale feldbusgesteuerte Steuerungseinheit angeschlossen sind.

EP 2 574 997 A1 offenbart ein Verfahren zur Einstellung von Betriebszuständen bei Produktionsanlagen entsprechend dem PROFI-Energy-Standard. Hierzu werden ein Strukturmodell, mindestens ein Prozessmodell sowie ein Betriebszustandsmodell genutzt, um ein Gesamtbetriebszustandsmodell zu erstellen. Dieses Gesamtbetriebszustandsmodell spiegelt sämtliche zeitlichen Abhängigkeiten für das Abschalten von Komponenten einer Prozesssteuerungsanlage wider. Kommandos nach dem PROFI-Energy-Standard werden dabei für das Energiemanagement der einzelnen Komponenten der Anlage genutzt.

WO 2012/113445 offenbart eine Vorrichtung zum Schalten einer Stromversorgung eines elektrisch betreibbaren Gerätes mit einem Eingang für eine erste elektrische Leitung und einem Ausgang für eine zweite elektrische Leitung und einen zwischenliegenden Schalter zum Ein- und Ausschalten der elektrischen Verbindung zwischen dem Eingang und dem Ausgang. Die Steuerungsvorrichtung empfängt über den Eingang auf der ersten elektrischen Leitung gesendete Datensignale, um in Abhängigkeit davon den Schalter anzusteuern. Damit ist ein ferngesteuertes Abschalten von an der Steuerungsvorrichtung angeschlossenen Geräten möglich.

Die EP 2 538 609 A1 zeigt einen Netzwerkknoten, bei dem zumindest ein Teil des Netzwerkknotens in einen energiesparenden Zustand versetzt werden kann, was bedeutet, dass in diesem Teil des Netzwerkknotens keine Daten oder nur eine reduzierte Menge an Daten ausgegeben und/oder empfangen wird. Das Umschalten in einen energiesparenden Zustand kann erst dann erfolgen, wenn alle Netzwerkgeräte, die an diesem Netzwerkanschluss angeschlossen sind, in den Energiesparzustand geschaltet wurden.

In der Druckschrift "Common Application Profil PROFIenergy - Technical Specification for PROFINET - Version 1.1" (PROFIBUS Nutzerorganisation e.V. (PNO); PROFIBUS & PROFINET International (PI), August 2012 (2012-08), XP55131803) werden Verfahren und Techniken spezifiziert, um Energiesparfunktionen in einem PROFINET IO Gerät zu implementieren. Bei den Verfahren teilt eine übergeordnete Steuerung aber immer direkt einem Gerät mit, in welchen Energiesparzustand es übergehen soll.

Solche dezentralen Steuerungseinheiten haben den Nachteil einen relativ großen Hardwareaufwands. Zudem ist der Energiesparzustand für eine Gruppe von Geräten bei der Installation hardwaremäßig vorgegeben und kann nicht flexibel bei der Konfiguration oder sogar im laufenden Betrieb angepasst werden.

DE 10 2009 047 803 A1, DE 10 2009 047 804 A1 und DE 10 2009 047 805 A1 beschreiben ein speicherprogrammierbares Steuerungssystem mit einer Hauptprozessoreinheit und einer Peripherieeinheit, die über ein Bussystem miteinander verbunden sind. Über das Bussystem kann für jede Peripherieeinheit ein ereignisgesteuertes selektives oder gemeinsames Ein- und/oder Ausschalten einer über das Bussystem der jeweiligen Peripherieeinheit zur Verfügung gestellten Stromversorgung ermöglicht werden, um den Energieverbrauch des speicherprogrammierbaren Steuerungssystems zu reduzieren.

Ausgehend hiervon ist es Aufgabe der vorliegenden Erfindung eine verbesserte Steuerungseinrichtung sowie ein verbessertes Verfahren zum Umschalten von Einund/oder Ausgabeeinheiten einer solchen Steuerungseinrichtung in einen Energiesparzustand zu schaffen, bei dem die Auswahl, Gruppierung und Ansteuerung von Ein- und/oder Ausgabeeinheiten oder Teilen davon zum Umschalten in einen Energiesparzustand vereinfacht wird.

Die Aufgabe wird durch die Steuerungseinrichtungen mit den Merkmalen des Anspruchs 1 sowie durch das Verfahren mit den Merkmalen des Anspruchs 6 gelöst. Vorteilhafte Ausführungsformen sind in den Unteransprüchen beschrieben.

Bei einer Steuerungseinrichtung mit einer Steuerungseinheit, die über einen Datenübertragungskanal (wie z. B. einem Feldbus) mit mindestens einer Ein-/Ausgabeeinheit in Kommunikationsverbindung steht, wird vorgeschlagen, dass die Steuerungseinrichtung über den Ein-/Ausgabeeinheiten zugeordnete vorgegebene Energiespar-Prozessdaten für Energiesparzustände verfügt und eingerichtet ist, um anstelle eines Austauschs von Prozessdaten im Energiesparzustand auf die vorgegebenen Energiespar-Prozessdaten zuzugreifen.

Bei einer solchen vorzugsweise speicherprogrammierbaren Steuerungseinrichtung werden Prozessdaten z. B. über Prozessdatenabbilder zwischen den Ein-/Ausgabeeinheiten und der Steuerungseinheit ausgetauscht. Eine solche Steuerungseinheit kann eine programmierbare Steuerung (SPS/PLC o.ä.) oder ein zwischengeschalteter Feldbuskoppler oder Feldbuscontroller eines Feldbusknotens sein, der einer übergeordneten Steuerungseinheit untergeordnet ist.

Gemäß der Lehre der vorliegenden Erfindung können ausgewählte Ein- und/oder Ausgabeeinheiten oder Teile davon in einen Energiesparzustand geschaltet werden, wobei dann die für diese Ein- und/oder Ausgabeeinheit bzw. Teile davon vorgegebenen Energiespar-Prozessdaten anstelle der beispielsweise über einen Prozessdatenabbild ausgetauschten Prozessdaten verwendet werden.

Damit lässt sich auf sehr einfache und flexible Weise durch zentrale oder dezentrale Prüfung des Vorliegens von Umschaltaktionen oder ggf. durch Übertragung von Umschaltbefehlen über den Datenübertragungskanal eine Parametrierung und Umschaltung von Ein-/Ausgabeeinheiten einzeln oder in Gruppen erreichen.

Es wird somit vorgeschlagen, den Ein-/Ausgabeeinheiten oder Teilen hiervon mindestens ein Energiesparzustand durch geeignete Energiespar-Prozessdaten zuzuordnen und diese vorgegebenen Energiespar-Prozessdaten als Ersatzwerte für die ansonsten z. B. über ein Prozessdatenabbild ausgetauschten Prozessdaten zu nutzen. Durch das Abspeichern vorgegebener Energiespar-Prozessdaten, die in den Ein-/Ausgabeeinheiten einschließlich Teilen davon zugeordnet werden, gelingt es auf einfache Weise Energiesparprofile für die verfügbaren Ein-/Ausgabeeinheiten und deren Kanäle mit den daran angeschlossenen Busteilnehmern festzulegen. Der Wechsel in den Energiesparmodus für ausgewählte Ein-/Ausgabeeinheiten und deren Kanäle sowie von Gruppen solcher Kanäle kann dann auf einfache Weise durch Aktivierung eines vorgegebenen Energiesparprofils erfolgen. Eine übergeordnete Steuerung bzw. Steuerungsroutine braucht damit keine Kenntnis über die konkrete Ansteuerung der untergeordneten Einheiten haben, um diese in einen Energiezustand zu überführen. Dies wird vielmehr außerhalb der Steuerung als Energiesparprofil vordefiniert. Zudem wird dem Anwender durch die Definierbarkeit von Energiesparprofilen für einzelne Kanäle oder Gruppen von Kanälen ohne Kenntnis von konkreten Busteilnehmern die flexible Möglichkeit gegeben, diese in gewünschte Energiesparzustände zu überführen.

Erfindungsgemäß sind die vorgegebenen Energiespar-Prozessdaten einzelnen Kanälen der Ein-/Ausgabeeinheiten zugeordnet.

Die Steuerungseinheit ist eingerichtet, ausgewählte Kanäle der Ein-/Ausgabeeinheiten in einen Energiesparzustand zu schalten, wobei für den ausgewählten Kanal anstelle einer Nutzung von Prozessdaten des jeweiligen Kanals - z.B. durch Prozessdatenaustausch - auf die zugeordneten vorgegebenen Energiesparprozessdaten zugegriffen wird.

Ein Energiesparprofil mit vorgegebenen Prozessdaten wird somit für einzelne Kanäle der Ein-/Ausgabeeinheiten vorgegeben, die dann individuell oder in Gruppen bei Bedarf in den Energiesparmodus versetzt werden. Im Energiesparmodus sind dann die vorgegebenen Energiespar-Prozessdaten für den jeweils in den Energiesparmodus versetzten Kanal vorgreiflich und werden anstelle der ausgetauschten Prozessdaten verwendet.

Hierbei ist denkbar, dass die vorgegebenen Energiespar-Prozessdaten von einer Steuerungseinheit in das Prozessdatenabbild eingeschrieben werden, wobei die Daten des Prozessdatenabbildes dann von dem Controller oder Koppler, der das Prozessabbild beinhaltet, zu den daran angeschlossenen Ein-/Ausgabeeinheiten übertragen werden.

Denkbar ist aber auch, dass die an die Steuerungseinheit über einen Datenübertragungskanal angeschlossenen Ein-/Ausgabeeinheiten selbst nach Erhalt eines Energiesparanfrage (z.B. in Form eines Umschaltkriteriums oder eines Energiesparbefehls) von der Steuerungseinrichtung oder nach Feststellung, dass ein Kriterium zum Umschalten in den Energiesparmodus erfüllt ist, anstelle der über den Datenübertragungskanal ausgetauschten Prozessdaten auf die in der Ein-/Ausgabeeinheit abgespeicherten, vorgegebenen Energiespar-Prozessdaten für den jeweiligen Kanal zugreifen und diese verwenden.

Hierzu können die Ein-/Ausgabeeinheiten jeweils eine Speichereinheit zur Speicherung der ihnen vorgegebenen Energiesparprozessdaten haben.

Denkbar ist aber auch, dass die Steuerungseinheit eine Speichereinheit zur Speicherung der den angeschlossenen Ein-/Ausgabeeinheiten zugeordneten vorgegebenen Energiespar-Prozessdaten hat. Diese abgespeicherten EnergiesparProzessdaten können dann von der Steuerungseinheit z. B. in das Prozessabbild eingeschrieben werden, wenn eine angesprochene Ein-/Ausgabeeinheit oder ein Kanal hiervon im Energiesparmodus ist.

Eine optionale Ausführungsform sieht vor, dass ein separates Energiespar-Steuerungsmodul in den Datenkanal z.B. zwischen einem Kopfmodul und den daran angeschlossenen Ein/Ausgabeeinheiten eingeschleift ist. Es kann z.B. als Blockmodul eines modularen Feldbusknotens ausgeführt sein. Die Energiespar-Prozessdaten sind dann als das mindestens eine Energiesparprofil vorzugsweise zusammen mit zugehörigen Umschaltkriterien in einer Speichereinheit des Energiespar-Steuerungsmoduls abgespeichert. Das Energiespar-Steuerungsmodul kann optional die Logik zur Feststellung haben, ob für die einzelnen Ein/Ausgabeeinheiten bzw. deren Kanäle die vorgegebenen, abgespeicherten Umschaltkriterien zur Umschaltung in einen jeweiligen Energiezustand erfüllt sind. Dann werden die abgespeicherten Energiespar-Prozessdaten in das Prozessabbild geschrieben oder direkt an die jeweiligen Ein/Ausgabemodule zur weiteren Nutzung übertragen.

Die Ein-/Ausgabeeinheiten sind vorzugsweise mit der Steuerungseinheit über einen Feldbuscontroller oder Feldbuskoppler verbunden. Der Feldbuscontroller / Feldbuskoppler hat dann eine Speichereinheit zur Speicherung eines Prozessabbildes für die auszutauschenden Prozessdaten und zur Speicherung der den angeschlossenen Ein-/Ausgabeeinheiten zugeordneten vorgegeben Energiespar-Prozessdaten. Für das erfindungsgemäße Verfahren zum Umschalten von Ein-/Ausgabeeinheiten einer Steuerungseinrichtung in einen Energiesparzustand wird vorgeschlagen, dass Energiespar-Prozessdaten, die den einzelnen Ein-/Ausgabeeinheiten einschließlich Teilen davon (z. B. Kanälen) zugeordnet werden, in einem Schritt der Konfiguration bzw. Parametrierung abgespeichert werden. Auf diese abgespeicherten EnergiesparProzessdaten wird dann z. B. im laufenden Betrieb einer Steuerungseinrichtung zugegriffen, wenn eine Ein-/Ausgabeeinheit oder ein Teil davon in einen Energiesparzustand geschaltet wird. Dann wird anstelle der zwischen den Ein-/Ausgabeeinheiten und einer über einen Datenübertragungskanal daran angeschlossenen Steuerungseinheit austauschbaren Prozessdaten die für den im Energiesparmodus befindlichen Teil der Ein-/Ausgabeeinheit zugeordneten abgespeicherten Energiespar-Prozessdaten genutzt.

Besonders vorteilhaft ist es dabei, wenn das Umschaltverfahren die Schritte aufweist:
- Parametrieren von Kanälen der Ein-/Ausgabeeinheiten mit mindestens einem Energiezustand umfassend mindestens ein dem zu parametrisierenden Kanal zugeordnetes, vorgegebenes Energiespar-Prozessdatum als Ausgangwert für den Kanal, den der Ausgang des Kanals anstelle eines über ein Prozessabbild durch eine Steuerungseinheit vorgegebenes Prozessdatum einnimmt, und umfassend ein Umschaltkriterium, und
- Umschalten in den Energiesparzustand nach Prüfung durch die Steuerungseinheit oder durch ein an den Datenübertragungskanal angeschlossenes Energiespar-Steuerungsmodul, ob ein Energiesparzustand durch Vorgabe von EnergiesparProzessdaten parametriert ist und ob das für den jeweiligen Kanal parametrierte Umschaltkriterium durch ein aktuell mit einer Umschaltanfrage zum Umschalten mindestens eines Kanals von Ein-/Ausgabeeinheiten in einen Energiesparzustand erhaltenes oder durch ein festgestelltes Umschaltkriterium erfüllt ist.

Denkbar ist auch, dass das Umschaltverfahren die Schritte aufweist:
- Parametrieren von Kanälen der Ein-/Ausgabeeinheiten mit mindestens einem Energiezustand, der mindestens ein dem zu parametrisierenden Kanal zugeordnetes vorgegebenes Energiespar-Prozessdatum als Ausgangwert für den Kanal und ein Umschaltkriterium umfasst. Der Ausgang des in den Energiesparzustand geschalteten Kanals nimmt dann das vorgegebene EnergiesparProzessdatum als Ausgangswert anstelle eines über einen Prozessabbild durch eine Steuerungseinheit vorgegebenes Prozessdatum ein.
- Übersenden einer Anfrage zum Umschalten mindestens eines Kanals von Ein-/Ausgabeeinheiten in einen Energiesparzustand enthaltend ein Umschaltkriterium an die mindestens eine Ein-/Ausgabeeinheit und
- Umschalten in den Energiesparzustand nach Prüfung durch die angesprochene Ein-/Ausgabeeinheit, ob ein Energiesparzustand durch Vorgabe von EnergiesparProzessdaten parametriert ist und ob das für den jeweiligen Kanal parametrierte Umschaltkriterium durch das übersandte Umschaltkriterium erfüllt ist.

Die Erfindung wird nachfolgend anhand eines Ausführungsbeispiels mit den beigefügten Zeichnungen näher erläutert. Es zeigen:
- Figur 1: - Blockdiagramm einer Steuerungseinrichtung mit einer Steuerungseinheit, einem Feldbuscontroller/-koppler und daran angeschlossenen Ein-/Ausgabeeinheiten;
- Figur 2: - Flussdiagramm eines Verfahrens zum Umschalten von Ein/Ausgabeeinheiten in einen Energiesparzustand.

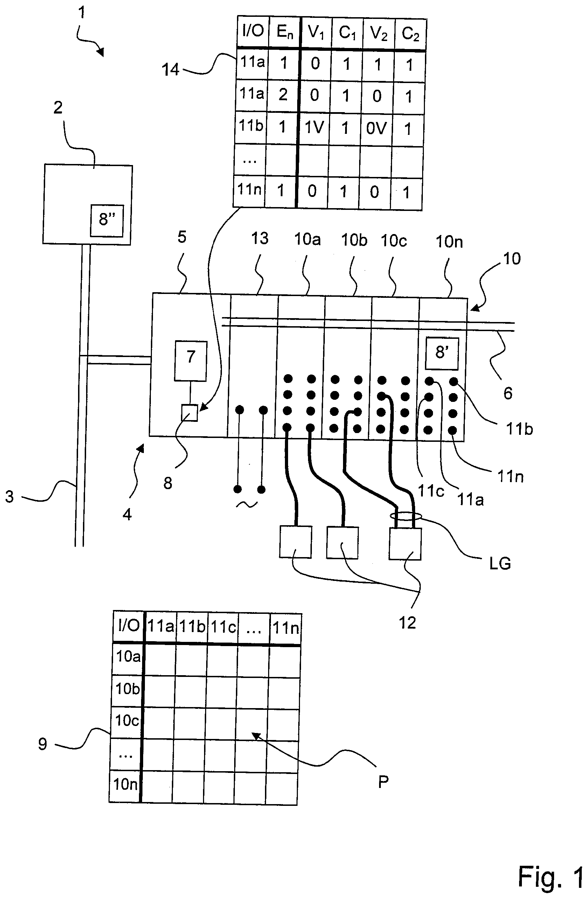

Figur 1 lässt ein Blockdiagramm einer Steuerungseinrichtung 1 erkennen, die in an sich bekannter Weise eine speicherprogrammierbare Steuerungseinheit 2 hat. Die speicherprogrammierbare Steuerungseinheit 2 ist eingerichtet, um ein Steuerungsprogramm auszuführen und Prozessdaten P über einen Feldbus 3 mit mindestens einem Netzknoten 4 auszutauschen. Der Netzknoten 4 hat einen Feldbuscontroller/-koppler 5. Der Feldbuscontroller/-koppler 5 ist eingerichtet, um Daten zwischen dem Protokoll des Feldbusses 3 auf das Kommunikationsprotokoll eines internen proprietären Datenübertragungskanals 6 umzusetzen und umgekehrt. Hierzu verfügt der Feldbuscontroller/-koppler 5 über eine Recheneinheit 7 sowie über eine damit verbundene Speichereinheit 8. In der Speichereinheit 8 wird ein Prozessdatenabbild 9 hinterlegt, in dem Prozessdaten P für die an den Feldbuscontroller/-koppler 5 über den internen Datenübertragungskanal 6 angeschlossenen Ein-/Ausgabeeinheiten 10 abgelegt werden.

Damit findet ein Austausch von Prozessdaten P der aus dem Prozessabbild 9 an die angeschlossenen Ein-/Ausgabeeinheiten 10 und umgekehrt über den Datenübertragungskanal 6 statt. Auf diese Weise können von der Steuerungseinheit 2 über den Feldbus 3 vorgegebene Prozessdaten P in das Prozessdatenabbild 9 eingeschrieben werden. Der Feldbuscontroller/-koppler 5 überträgt diese Prozessdaten P aus dem Prozessdatenabbild 9 z. B. zyklisch gemäß des Kommunikationsprotokolls des Datenübertragungskanals 6 an die Ein-/Ausgabeeinheiten 10. Diese Ein-/Ausgabeeinheiten 10 können ihrerseits Prozessdaten P über den Datenübertragungskanal 6 in das Prozessdatenabbild 9 schreiben. Diese Prozessdaten P können dann vom Feldbuscontroller/-koppler 5 über den Feldbus 3 an die Steuerungseinheit 2 übergeben werden.

Die Ein-/Ausgabeeinheiten 10 haben jeweils einen oder eine Mehrzahl von Kanälen 11a, 11b, ..., 11n, an die Busteilnehmer 12 angeschlossen werden können. Solche Busteilnehmer 12 können Aktoren, Sensoren oder sonstige Geräte sein.

Die Busteilnehmer 12 werden über einen Spannungseinspeisemodul 13 des modular aufgebauten Netzknotens 4 mit elektrischer Energie (Leistungsspannung) versorgt. Hierbei handelt es sich beispielsweise um eine 24 Volt, 110 Volt oder 220 Volt-Spannungsversorgung, die einen wesentlich höheren Stromfluss (> 5 Ampere) erlaubt, als die Spannungsversorgung für die Elektronik des Netzknotens 4, welche üblicherweise zusammen mit dem Datenübertragungskanal 6 bereitgestellt wird.

Um nun auf einfache und flexible Weise einzelne Ein-/Ausgabeeinheiten 10 oder einzelne Kanäle 11a, 11b, ..., 11n der Ein-/Ausgabeeinheiten 10 einzeln oder in Gruppen in einen Energiesparmodus zu versetzen, bei dem der Energieverbrauch reduziert wird, erfolgt eine Parametrierung der Kanäle 11a, 11b, ..., 11n mit einer Anzahl von 1 bis n Energiezuständen Eₙ. Ein Energiezustand Eₙ wird dabei durch zwei Attribute beschrieben. Zum einen ist ein Energiesparprozessdatum V vorgesehen, welches den Ausgangswert des zugeordneten Kanals beschreibt, den der Kanal 11a, 11b, ..., 11n einnehmen sollen, wenn dieser in den Energiezustand geschaltet ist. Weiterhin ist ein Umschaltkriterium C vorgesehen, das ein Entscheidungsmerkmal beschreibt, um in einen Energiezustand zu wechseln. So kann z. B. entsprechend des PROFIenergy-Standards die Angabe einer Pausenzeit als Kriterium C verwendet werden. Bei dem sercos Energy-Standard wird das Kriterium C durch eine Identifikationsnummer beschrieben.

Im Rahmen des Engineerings werden nun Ausgangskanäle 11a, 11b, ..., 11n oder Gruppen von solchen Ausgangskanälen zugehöriger Ein-/Ausgabeeinheiten 10 mindestens ein Energiezustand Eₙ zugeordnet. Die zugeordneten Energiezustände Eₙ können dann in einer Tabelle 14 hinterlegt werden. Die Energiezustands-Tabelle 14 kann beispielsweise in dem Feldbuscontroller/-koppler 5, der übergeordneten Steuerungseinheit 2 oder aber auch die einzelnen Ein-/Ausgabeeinheiten 10 in einer dort vorhandenen Speichereinheit 8, 8', 8" abgelegt werden. Für den Fall, dass die Energiezustands-Tabelle 14 in den einzelnen Ein-/Ausgabeeinheiten 10 abgelegt wird, befinden sich in der Tabelle bevorzugt dann nur die Energiezustände für die Kanäle 11a, 11b, ..., 11n der entsprechenden Ein-/Ausgabeeinheit 10.

Je nach Ausprägung eines Ausgangkanals 11a, 11b, ..., 11n können unterschiedliche Energieersatzwerte V konfiguriert werden. So ist denkbar, einen einfachen digitalen Ausgangswert 0 (AUS) oder 1 (EIN) als Energiesparprozessdatum vorzugeben. Für analoge Ausgänge ist das Energiespar-Prozessdatum innerhalb des unterstützten Ausgangsbereichs frei wählbar. Bei komplexen Ein-/Ausgabeeinheiten 10 sind die Energie-Prozessdaten anwendungsspezifisch im unterstützten Bereich wählbar.

Zur einfacheren Adressierung ist es denkbar, Gruppen von Kanälen 11a, 11b, ..., 11n oder Gruppen von Ein-/Ausgabeeinheiten 10 zu konfigurieren. Damit wird das Ansteuern von Energiezuständen im laufenden Betrieb vereinfacht, indem die Konfiguration der Energiezustände von Ausgängen von Busklemmeinheiten verwaltet wird. Die Konfiguration, Verwaltung und Speicherung von Gruppen erfolgt beispielsweise von dem Feldbuscontroller/-koppler 5. Die Energiesparzustände von Gruppen können unabhängig voneinander im laufenden Betrieb angesteuert werden. Der Feldbuscontroller/-koppler 5 kann dabei eine Anzahl von 1 bis n Gruppen verwalten.

Durch die Einführung von Gruppen können logische Einheiten, z. B. für zusammengehörige Anlagenteile, verbunden über verschiedene Ausgangskanäle 11a, 11b, ..., 11n und Busklemmeneinheiten (Ein-/Ausgabeeinheiten 10) gebildet werden. Unterschiedliche Anlagenteile können hierdurch entkoppelt voneinander in Energiezustände versetzt werden. Zeitliche oder andere Abhängigkeiten können durch die Steuerungseinheit 2 berücksichtigt werden.

Ferner kann eine Gruppe auch alle Kanäle 11a, 11b, ..., 11n der Ein-/Ausgabeeinheiten 10 enthalten. Hierdurch können alle Ausgangskanäle 11a, 11b, ..., 11n über eine Adresse verwaltet und damit mit einem Kommando über den Feldbus 3 in Energiesparzustände versetzt werden.

Damit können Energiesparzustände bzw. Energiesparfunktionen auf einzelne Kanäle 11a, 11b, ..., 11n und beliebige Gruppen von solchen Kanälen angewendet werden.

Anhand des rechten Busteilnehmers 12 wird deutlich, dass Busteilnehmer 12 auch an mehrere Kanäle 11a, 11b, ..., 11n desselben oder unterschiedlicher Ein/Ausgabeeinheiten 10 angeschlossen werden können. Diese Kanäle 11a, 11b, ..., 11n sind dann zu einer logischen (Unter-)Gruppe LG gebündelt, wobei Energiezustände Eₙ für eine solche logische (Unter-)Gruppe LG insgesamt festlegbar sind.

Die Ansteuerung von Energiefunktionen kann über z.B. einen Nicht-Echtzeitkanal des Feldbusses 3 bzw. des Datenübertragungskanals 6 erfolgen. Anfragen zum Ansteuern eines Energiezustandes können dabei auf einzelne Ausgangskanäle 11a, 11b, ..., 11n bzw. Ausgangskanalgruppen oder auf die durch den Feldbuscontroller/-koppler 5 verwalteten Gruppen von Ausgangskanälen 11a, 11b, ..., 11n angewendet werden.

Der Ablauf zum Umschalten in einen Energiesparzustand für einen Ausgangskanal 11a, 11b, ..., 11n ist vereinfacht wie folgt:
1) Es erfolgt eine Anfrage durch die Steuerungseinheit 2 über den Feldbus 3, den Energiezustand einzunehmen. Als Parameter enthält eine solche Anfrage immer ein Kriterium C. Ist für den adressierten Ausgangkanal 11a, 11b, ..., 11n ein Energiezustand Eₙ konfiguriert, der diesem Kriterium C entspricht, wird der Ausgang dieses Kanals 11a, 11b, ..., 11n auf den zugehörigen Energie-Ersatzwert V als zugeordnetes vorgegebenes Energiespar-Prozessdatum des konfigurierten Energiezustandes Eₙ geschaltet. Die synchronen Echtzeit-Prozessdaten werden ab dann nicht mehr auf diesen Ausgangskanal 11a, 11b, ..., 11n abgebildet.
2) Es erfolgt eine Anfrage, den Energiezustand zu verlassen. Der adressierte Ausgangskanal 11a, 11b, ..., 11n verlässt dann den Energiezustand Eₙ und wechselt dann in den normalen Prozessdatenaustausch z. B. über ein Prozessabbild.

Der Ablauf zum Umschalten in einen Energiezustand für Gruppen ist vereinfacht wie folgt:
1) Es erfolgt eine Anfrage, einen Energiezustand Eₙ einzunehmen. Als Parameter enthält eine solche Anfrage immer ein Kriterium C. Für jeden Ausgangskanal 11a, 11b, ..., 11n bzw. jede Gruppe solcher Ausgangskanäle der adressierten Gruppe wird geprüft, ob ein Energiezustand Eₙ mit passenden Kriterium C konfiguriert ist. Falls dies der Fall ist, wird der Ausgang dieses Kanals 11a, 11b, ..., 11n auf den zugehörigen Energieersatzwert V, d. h. das vorgegebene EnergiesparProzessdatum des konfigurierten Energiezustands Eₙ geschaltet. Die synchronen Echtzeitprozessdaten werden ab dann nicht mehr auf diese Ausgangskanäle 11a, 11b, ..., 11n abgebildet.
2) Es erfolgt eine Anfrage, den Energiezustand Eₙ wieder zu verlassen. Alle konfigurierten Ausgangskanäle 11a, 11b, ..., 11n der adressierten Gruppe verlassen dann ihren Energiezustand Eₙ, soweit sie sich in einem solchen befinden und wechseln zurück in den normalen Prozessdatenaustausch.

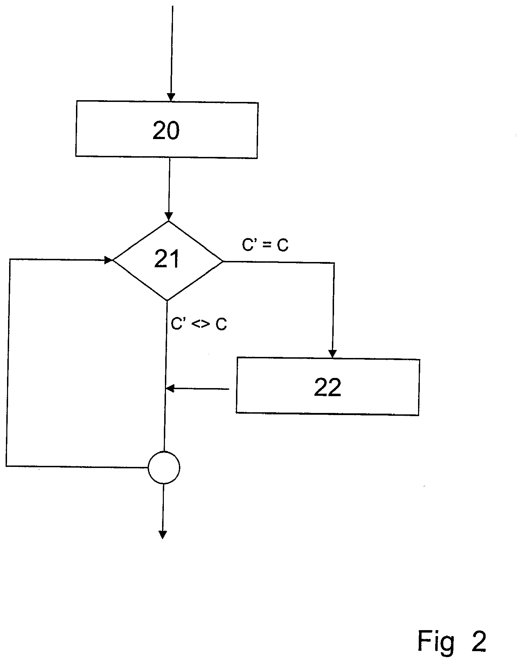

Das Verfahren wird anhand der Figur 2 nochmals deutlicher.

In einem Schritt 20 erfolgt eine Konfiguration indem den einzelnen Ein-/Ausgabeeinheiten 10 bzw. deren Kanäle 11a, 11b, ..., 11n zugeordnete vorgegebene Energiespar-Prozessdaten V (Energie-Ersatzwerte) für einen Energiesparzustand Eₙ abgespeichert werden.

Im laufenden Betrieb, bei dem eine Steuereinheit 2 z. B. ein speicherprogrammiertes Programm ablaufen lässt, können einzelne Kanäle 11a, 11b, ..., 11n oder Gruppen davon sowie einzelne ausgewählte Ein-/Ausgabeeinheiten 10 bzw. Gruppen davon bei Bedarf in einen Energiesparzustand versetzt werden. Hierbei wird im Prozess wiederholt im Schritt 21 geprüft, ob ein für mindestens einen Energiezustand Eₙ vorgegebenes und abgespeichertes Kriterium C erfüllt ist (Ist C' = C erfüllt?) Wenn dies der Fall ist, wird für die Ausgangskanäle 11a, 11b, ..., 11n, bei denen das Kriterium C erfüllt ist, ein Umschalten in den Energiesparzustand im Schritt 22 veranlasst. Hierzu erfolgt ein Zugreifen auf die abgespeicherten Energiespar-Prozessdaten V (Energie-Ersatzwerte) der betroffenen Ein-/Ausgabeeinheiten 10 bzw. der betroffenen Kanäle 11a, 11b, ..., 11n, wobei dann diese abgespeicherten Energiespar-Prozessdaten V anstelle von zwischen der Ein-/Ausgabeeinheit 10 und einer über den Datenübertragungskanal 6 daran angeschlossenen Steuerungseinheit 2, 5 austauschbaren Prozessdaten genutzt werden.

In dem dargestellten Ausführungsbeispiel kann das Umschalten in den Energiesparmodus auch durch den Feldbuscontroller/-koppler 5 selbst als Steuerungseinheit ohne übergeordnete Steuerungseinheit 2 oder autonom durch die Ein-/Ausgabeeinheiten 10 erfolgen. Es ist dabei lediglich erforderlich, dass der Feldbuscontroller/-koppler 5 oder die Ein-/Ausgabeeinheiten 10 durch geeignete Hard- und/oder Software in der Lage sind, das Vorliegen eines Kriteriums C anhand von zur Verfügung gestellten Prozessdaten oder Steuerungsdaten zu überprüfen, um dann in den Energiesparzustand zu wechseln.

## Patentansprüche

1. Steuerungseinrichtung (1) mit einer Steuerungseinheit (2, 5), die über einen Datenübertragungskanal (3, 6) zum Austausch von Prozessdaten (P) mit mindestens einer Ein- und/oder Ausgabeeinheit (10) in Kommunikationsverbindung steht, **dadurch gekennzeichnet, dass** die Steuerungseinrichtung (1) über der Ein-/Ausgabeeinheit (10) zugeordnete, vorgegebene Energiespar-Prozessdaten (V) für Energiesparzustände (Eₙ) der Ein-/Ausgabeeinheit (10) verfügt und eingerichtet ist, um anstelle der ausgetauschten Prozessdaten (P) im Energiesparzustand auf die vorgegebenen EnergiesparProzessdaten (V) zuzugreifen, wobei die vorgegebenen Energiespar-Prozessdaten (V) einzelnen Kanälen (11a, 11b, ..., 11n) der Ein-/Ausgabeeinheit (10) zugeordnet sind, und wobei die Steuerungseinheit (2, 5) eingerichtet ist, ausgewählte Kanäle (11a, 11b, ..., 11n) der Ein-/Ausgabeeinheit (10) in einen Energiesparzustand zu schalten, wobei für die ausgewählten Kanäle (11a, 11b, ..., 11n) anstelle der Nutzung von Prozessdaten (P) des jeweiligen Kanals (11a, 11b, ..., 11n) die zugeordneten vorgegebenen Energiespar-Prozessdaten (V) genutzt werden.

2. Steuerungseinrichtung (1) nach Anspruch 1, **dadurch gekennzeichnet, dass** die Steuerungseinrichtung (1) eingerichtet ist, Gruppen von Ein-/Ausgabeeinheiten (10) oder Gruppen von Kanälen (11a, 11b, ..., 11n) von Ein-/Ausgabeeinheiten (10) zur Nutzung der vorgegebenen Energiespar-Prozessdaten (V) in einen Energiesparmodus zu schalten.

3. Steuerungseinrichtung (1) nach einem der vorhergehenden Ansprüche, **dadurch gekennzeichnet, dass** die Ein-/Ausgabeeinheiten (10) eine Speichereinheit (8') zur Speicherung der ihnen vorgegebenen Energiespar-Prozessdaten (V) haben.

4. Steuerungseinrichtung (1) nach einem der vorhergehenden Ansprüche, **dadurch gekennzeichnet, dass** die Steuerungseinheit (2, 5) eine Speichereinheit ( 8") zur Speicherung der den angeschlossenen Ein-/Ausgabeeinheiten (10) zugeordneten vorgegebenen Energiespar-Prozessdaten (V) hat.

5. Steuerungseinrichtung (1) nach einem der vorhergehenden Ansprüche, **dadurch gekennzeichnet, dass** die Ein-/Ausgabeeinheiten (10) mit der Steuerungseinheit (2) über einen Feldbuscontroller oder Feldbuskoppler (5) verbunden sind, wobei der Feldbuscontroller oder Feldbuskoppler (5) eine Speichereinheit (8) zur Speicherung eines Prozessabbildes (9) für die auszutauschenden Prozessdaten (P) und zur Speicherung der den angeschlossenen Ein-/Ausgabeeinheiten (10) zugeordneten vorgegebenen Energiespar-Prozessdaten (V) hat.

6. Verfahren zum Umschalten von Ein- und/oder Ausgabeeinheiten (10) einer Steuerungseinrichtung (1) in einen Energiesparzustand der Ein-/Ausgabeeinheiten (10), bei dem der Energieverbrauch durch Busteilnehmer (12), die an die Ein-/Ausgabeeinheiten (10) anschließbar sind, reduziert wird, **gekennzeichnet durch**
- Abspeichern von vorgegebenen Energiespar-Prozessdaten (V) für einzelne Kanäle (11a, 11b, ..., 11n) der Ein-/Ausgabeeinheiten (10) für mindestens einen Energiesparzustand;
- Zugreifen auf die abgespeicherten Energiespar-Prozessdaten (V) einer Ein-/Ausgabeeinheit (10), wenn die Ein-/Ausgabeeinheit (10) mindestens teilweise in einen Energiesparzustand geschaltet wurde, wobei ein zugeordneter Kanal (11a, 11b, ..., 11n) in einen Energiesparzustand versetzt wurde und wobei dann diese abgespeicherten Energiespar-Prozessdaten (V) anstelle von zwischen der Ein-/Ausgabeeinheit (10) und einer daran über einen Datenübertragungskanal (3, 6) angeschlossenen Steuerungseinheit (2, 5) austauschbaren Prozessdaten (P) genutzt werden.

7. Verfahren nach Anspruch 6, **dadurch gekennzeichnet, dass** das Abspeichern der vorgegebenen Energiespar-Prozessdaten (V) in Speichereinheiten (8, 8', 8") der Ein-/Ausgabeeinheiten (10), der Steuerungseinheit (2), einem zwischen einer Steuerungseinheit (2) und den Ein-/Ausgabeeinheiten (10) geschalteten Feldbuscontroller oder Feldbuskopplerkoppler (5) und/oder einem an den Datenübertragungskanal (3, 6) angeschlossenen Energiespar-Steuerungsmodul erfolgt.

8. Verfahren nach einem der Ansprüche 6 oder 7, **gekennzeichnet durch** gruppenbezogenes Abspeichern von vorgegebenen Energiespar-Prozessdaten (V) für eine Gruppe von Ein-/Ausgabeeinheiten (10) oder für eine Gruppe von Kanälen (11a, 11b, ..., 11n) solcher Ein-/Ausgabeeinheiten (10) und Zugreifen auf die abgespeicherten Energiespar-Prozessdaten (V) einer solchen Gruppe, wenn die Ein-/Ausgabeeinheiten (10) oder Kanäle (11a, 11b, ..., 11n) der Gruppe insgesamt in einen Energiesparzustand versetzt werden.

9. Verfahren nach einem der Ansprüche 6 bis 8, **gekennzeichnet durch**
- Parametrieren von Kanälen (11a, 11b, ..., 11n) der Ein-/Ausgabeeinheiten (10) mit mindestens einem Energiezustand umfassend mindestens ein dem zu parametrisierenden Kanal (11a, 11b, ..., 11n) zugeordnetes, vorgegebenes Energiespar-Prozessdatum (V) als Ausgangwert für den Kanal (11a, 11b, ..., 11), den der Ausgang des Kanals (11a, 11b, ..., 11n) anstelle eines über ein Prozessabbild (9) durch eine Steuerungseinheit (2, 5) vorgegebenes Prozessdatum (P) einnimmt, und umfassend ein Umschaltkriterium (C),
- Übersenden einer Anfrage zum Umschalten mindestens eines Kanals (11a, 11b, ..., 11n) von Ein-/Ausgabeeinheiten (10) in einen Energiesparzustand enthaltend ein Umschaltkriterium (C) an die mindestens eine Ein-/Ausgabeeinheit (10) und
- Umschalten in den Energiesparzustand nach Prüfung durch die angesprochene Ein-/Ausgabeeinheit (10), ob ein Energiesparzustand (Eₙ) durch Vorgabe von Energiespar-Prozessdaten (V) parametriert ist und ob das für den jeweiligen Kanal (11a, 11b, ..., 11n) parametrierte Umschaltkriterium (C) durch das übersandte Umschaltkriterium (C)erfüllt ist.

10. Verfahren nach einem der Ansprüche 6 bis 8, **gekennzeichnet durch**
- Parametrieren von Kanälen (11a, 11b, ..., 11n) der Ein-/Ausgabeeinheiten (10) mit mindestens einem Energiezustand umfassend mindestens ein dem zu parametrisierenden Kanal (11a, 11b, ..., 11n) zugeordnetes, vorgegebenes Energiespar-Prozessdatum (V) als Ausgangwert für den Kanal (11a, 11b, ..., 11), den der Ausgang des Kanals (11a, 11b, ..., 11n) anstelle eines über ein Prozessabbild (9) durch eine Steuerungseinheit (2, 5) vorgegebenes Prozessdatum (P) einnimmt, und umfassend ein Umschaltkriterium (C), und
- Umschalten in den Energiesparzustand nach Prüfung durch die Steuerungseinheit (2, 5) oder durch ein an den Datenübertragungskanal (3, 6) angeschlossenes Energiespar-Steuerungsmodul, ob ein Energiesparzustand (Eₙ) durch Vorgabe von Energiespar-Prozessdaten (V) parametriert ist und ob das für den jeweiligen Kanal (11a, 11b, ..., 11n) parametrierte Umschaltkriterium (C) durch ein aktuell mit einer Umschaltanfrage zum Umschalten mindestens eines Kanals (11a, 11b, ..., 11n) von Ein-/Ausgabeeinheiten (10) in einen Energiesparzustand erhaltenes oder durch ein festgestelltes Umschaltkriterium (C') erfüllt ist.

## Claims

1. Controller (1) comprising a control unit (2, 5), which is in communication connection with at least one input and/or output unit (10) via a data transmission channel (3, 6) for exchange of process data (P), **characterized in that**
the controller (1) comprises predetermined power-saving process data (V) for power-saving states (Eₙ) assigned to the input/output units (10), and is adapted to access the predetermined power-saving process data (V) instead of the exchanged process data (P) when being in the power-saving state, wherein the predetermined power-saving process data (V) is assigned to individual channels (11a, 11b, ..., 11n) of the input/output units (10), and wherein the control unit (2, 5) is adapted to switch selected channels (11a, 11b, ..., 11n) of the input/output units (10) to a power-saving state, wherein for the selected channels (11a, 11b, ..., 11n) instead of using process data (P) of the respective channel (11a, 11b, ..., 11n) the assigned predetermined power-saving process data (V) is used.

2. Controller (1) according to claim 1, **characterized in that** the controller (1) is adapted to switch groups of input/output units (10) or groups of channels (11a, 11b, ..., 11n) of input/output units (10) for using of the predetermined power-saving process data (V) to a power-saving state.

3. Controller (1) according to any one of the preceding claims, **characterized in that** the input/output units (10) comprise a memory unit (8') for storing the power-saving process data (V) predetermined for the input/output units (10).

4. Controller (1) according to any one of the preceding claims, **characterized in that** the control unit (2, 5) comprises a memory unit (8") for storing the predetermined power-saving process data (V) assigned to the connected input/output units (10).

5. Controller (1) according to any one of the preceding claims, **characterized in that** the input/output units (10) are connected to the control unit (2) via a field bus controller or field bus coupler (5), wherein the field bus controller or field bus coupler (5) comprises a memory unit (8) for storing a process image (9) for the process data to be exchanged (P) and for storing of the predetermined power-saving process data (V) assigned to the connected input/output units (10).

6. Method for switching input and/or output units (10) of a controller (1) to a power-saving state, in which the power consumption of bus members (12), which are connectable to the input/output units (10), is reduced,
**characterized by**
- storing of predetermined power-saving process data (V) for individual channels (11a, 11b, ..., 11n) of the input/output units (10) for at least one power-saving state;
- accessing to the stored power-saving process data (V) of an input/output unit (10), if the input/output unit (10) has, at least partially, been switched into a power-saving state, wherein an associated channel (11a, 11b, ..., 11n) was set to a power-saving state and wherein the stored power-saving process data (V) is used instead of process data (P) that is exchangeable between the input/output unit (10) and a connected control unit (2, 5), via a data transmitting channel (3, 6).

7. Method according to claim 6, **characterized in that** the storing of the predetermined power-saving process data (V) takes place in memory units (8, 8', 8") of the input/output units (10), the control unit (2), a field bus controller or field bus coupler (5) interconnected between a control unit (2) and the input/output units (10), and/or a power-saving control module connected to the data transmitting channel (3, 6).

8. Method according to any one of the claims 6 or 7, **characterized by** grouprelated storing of predetermined power-saving process data (V) for a group of input/output units (10) or for a group of channels (11a, 11b, ..., 11n) of such input/output units (10) and accessing to the stored power-saving process data (V) of such a group, if the input/output units (10) or channels (11a, 11b, ..., 11n) of the group are set into a power-saving state altogether.

9. Method according to any one of the claims 6 to 8, **characterized by**
- parametrizing of channels (11a, 11b, ..., 11n) of the input/output units (10) with at least one power state comprising at least one predetermined power-saving process datum (V) assigned to the channel (11a, 11b, ..., 11n) to be parametrized, as an output value for the channel (11a, 11b, ..., 11n), that is taken by the output of the channel (11a, 11b, ..., 11n) instead of a process datum (P) predetermined via a process image (9) by a control unit (2, 5), and comprising a switching criteria (C),
- transmitting of a request for switching of at least one channel (11a, 11b, ..., 11n) of input/output units (10) into a power-saving state comprising a switching criteria (C) to the at least one input/output unit (10) and
- switching to the power-saving state after checking, by means of the addressed input/output unit (10), if a power-saving state (Eₙ) is parametrized by specification of power-saving process data (V) and if the parametrized switching criteria (C) for the respective channel (11a, 11b, ..., 11n) is fulfilled by the transmitted switching criteria (C).

10. Method according to any one of the claims 6 to 8, **characterized by**
- parametrizing of channels (11a, 11b, ..., 11n) of the input/output units (10) with at least one power state comprising at least one predetermined power-saving process datum (V) assigned to the channel (11a, 11b, ..., 11n) to be parametrized, as an output value for the channel (11a, 11b, ..., 11n), that is taken by the output of the channel (11a, 11b, ..., 11n) instead of a process datum (P) predetermined via a process image (9) by a control unit (2, 5), and comprising a switching criteria (C), and
- switching into the power-saving state after checking by means of the control unit (2, 5) or by means of a power-saving control module connected to the data transmitting channel (3, 6), if a power-saving state (Eₙ) is parametrized by specification of power-saving process data (V) and if the parametrized switching criteria (C) for the respective channel (11a, 11b, ..., 11n) is fulfilled by a switching criteria that is currently received together with a switching request for switching of at least one channel (11a, 11b, ..., 11n) of input/output units (10) into a power-saving state, or by a detected switching criteria (C').

## Revendications

1. Équipement de commande (1) comprenant une unité de commande (2, 5) qui est en liaison de communication avec au moins une unité d'entrée et/ou de sortie (10) par l'intermédiaire d'un canal de transmission de données (3, 6) pour échanger des données de processus (P), **caractérisé en ce que** l'équipement de commande (1) dispose de données de processus d'économie d'énergie prescrites (V) associées à l'unité d'entrée/sortie (10) pour des états d'économie d'énergie (Eₙ) de l'unité d'entrée/sortie (10) et est agencé pour accéder, en état d'économie d'énergie, aux données de processus d'économie d'énergie prescrites (V) au lieu des données de processus échangées (P), les données de processus d'économie d'énergie prescrites (V) étant associées à des canaux individuels (11a, 11b, ..., 11n) de l'unité d'entrée/sortie (10), et l'unité de commande (2, 5) étant agencée pour commuter des canaux sélectionnés (11a, 11b, ..., 11n) de l'unité d'entrée/sortie (10) dans un état d'économie d'énergie, les données de processus d'économie d'énergie prescrites (V) associées étant utilisées pour les canaux sélectionnés (11a, 11b, ..., 11n) au lieu d'utiliser des données de processus (P) du canal respectif (11a, 11b, ..., 11n).

2. Équipement de commande (1) selon la revendication 1, **caractérisé en ce que** l'équipement de commande (1) est agencé pour commuter des groupes d'unités d'entrée/sortie (10) ou des groupes de canaux (11a, 11b, ..., 11n) d'unités d'entrée/sortie (10) dans un mode d'économie d'énergie pour utiliser les données de processus d'économie d'énergie prescrites (V).

3. Équipement de commande (1) selon l'une des revendications précédentes, **caractérisé en ce que** les unités d'entrée/sortie (10) ont une unité de mémoire (8') pour mémoriser les données de processus d'économie d'énergie (V) qui leur sont prescrites.

4. Équipement de commande (1) selon l'une des revendications précédentes, **caractérisé en ce que** l'unité de commande (2, 5) a une unité de mémoire (8") pour mémoriser les données de processus d'économie d'énergie prescrites (V) associées aux unités d'entrée/sortie connectées (10).

5. Équipement de commande (1) selon l'une des revendications précédentes, **caractérisé en ce que** les unités d'entrée/sortie (10) sont reliées à l'unité de commande (2) par l'intermédiaire d'un contrôleur de bus de terrain ou d'un coupleur de bus de terrain (5), le contrôleur de bus de terrain ou le coupleur de bus de terrain (5) ayant une unité de mémoire (8) pour mémoriser une représentation de processus (9) pour les données de processus à échanger (P) et pour mémoriser les données de processus d'économie d'énergie prescrites (V) associées aux unités d'entrée/sortie connectées (10).

6. Procédé pour commuter des unités d'entrée et/ou de sortie (10) d'un équipement de commande (1) dans un état d'économie d'énergie des unités d'entrée/sortie (10), dans lequel la consommation d'énergie est réduite par l'intermédiaire de participants au bus (12) qui sont connectables aux unités d'entrée/sortie (10),
**caractérisé par**
- la mémorisation de données de processus d'économie d'énergie prescrites (V) pour des canaux individuels (11a, 11b, ..., 11n) des unités d'entrée/sortie (10) pour au moins un état d'économie d'énergie ;
- l'accès aux données de processus d'économie d'énergie mémorisées (V) d'une unité d'entrée/sortie (10) lorsque l'unité d'entrée/sortie (10) a été commutée au moins partiellement dans un état d'économie d'énergie, un canal associé (11a, 11b, ..., 11n) ayant été transféré dans un état d'économie d'énergie, et ces données de processus d'économie d'énergie mémorisées (V) étant alors utilisées au lieu de données de processus (P) échangeables entre l'unité d'entrée/sortie (10) et une unité de commande (2, 5) qui y est connectée par l'intermédiaire d'un canal de transmission de données (3, 6).

7. Procédé selon la revendication 6, **caractérisé en ce que** la mémorisation des données de processus d'économie d'énergie prescrites (V) s'effectue dans des unités de mémoire (8, 8', 8") des unités d'entrée/sortie (10), dans l'unité de commande (2), dans un contrôleur de bus de terrain ou un coupleur de bus de terrain (5) connecté entre une unité de commande (2) et les unités d'entrée/sortie (10) et/ou dans un module de commande connecté au canal de transmission de données (3, 6).

8. Procédé selon l'une des revendications 6 ou 7, **caractérisé par** une mémorisation par groupes de données de processus d'économie d'énergie prescrites (V) pour un groupe d'unités d'entrée/sortie (10) ou pour un groupe de canaux (11a, 11b, ..., 11n) de telles unités d'entrée/sortie (10) et par un accès aux données de processus d'économie d'énergie mémorisées (V) d'un tel groupe lorsque les unités d'entrée/sortie (10) ou canaux (11a, 11b, ..., 11n) du groupe ont été transférées en totalité dans un état d'économie d'énergie.

9. Procédé selon l'une des revendications 6 à 8, **caractérisé par**
- un paramétrage de canaux (11a, 11b, ..., 11n) des unités d'entrée/sortie (10) avec au moins un état d'énergie incluant au moins une donnée de processus d'économie d'énergie prescrite (V), associée au canal à paramétrer (11a, 11b, ..., 11n), comme valeur de départ pour le canal (11a, 11b, ..., 11) qu'adopte la sortie du canal (11a, 11b, ..., 11n) au lieu d'une donnée de processus (P) prescrite par l'intermédiaire d'une représentation de processus (9) à travers une unité de commande (2, 5), et incluant un critère de commutation (C),
- une transmission d'une demande de commutation au moins d'un canal (11a, 11b, ..., 11n) d'unités d'entrée/sortie (10) dans un état d'économie d'énergie contenant un critère de commutation (C) à la au moins une unité d'entrée/sortie (10) et
- une commutation dans l'état d'économie d'énergie après vérification par l'unité d'entrée/sortie sollicitée si un état d'économie d'énergie (Eₙ) est paramétré par prescription de données de processus d'économie d'énergie (V) et si le critère de commutation (C) paramétré pour le canal respectif (11a, 11b, ..., 11n) est rempli pour le critère de commutation (C) transmis.

10. Procédé selon l'une des revendications 6 à 8, **caractérisé par**
- un paramétrage de canaux (11a, 11b, ..., 11n) des unités d'entrée/sortie (10) avec au moins un état d'énergie incluant au moins une donnée de processus d'économie d'énergie prescrite (V), associée au canal à paramétrer (11a, 11b, ..., 11n), comme valeur de départ pour le canal (11a, 11b, ..., 11) qu'adopte la sortie du canal (11a, 11b, ..., 11n) au lieu d'une donnée de processus (P) prescrite par l'intermédiaire d'une représentation de processus (9) à travers une unité de commande (2, 5), et incluant un critère de commutation (C), et
- une commutation dans l'état d'économie d'énergie après vérification par l'unité de commande (2, 5) ou par l'intermédiaire d'un module de commande d'économie d'énergie connecté au canal de transmission de données (3, 6) si un état d'économie d'énergie (Eₙ) est paramétré par prescription de données de processus d'économie d'énergie (V) et si le critère de commutation (C) paramétré pour le canal respectif (11a, 11b, ..., 11n) est rempli par un critère de commutation (C') obtenu instantanément avec une demande de commutation pour commuter au moins un canal (11a, 11b, ..., 11n) d'unités d'entrée/sortie (10) dans un état d'économie d'énergie ou par un critère de commutation (C') constaté.
